# EUROPÄISCHE PATENTSCHRIFT

(11) **EP 0 846 135 B1**
(45) Veröffentlichungstag und Bekanntmachung des Hinweises auf die Patenterteilung: **02.08.2000**
(21) Anmeldenummer: 97926914.9
(22) Anmeldetag: 19.06.1997
(51) Int. Cl.: C08G 18/32, C08G 18/73, C08G 18/75, C08G 18/38

(54) **VERFAHREN ZUR HERSTELLUNG VON POLYURETHANACRYLAT-OBERFLÄCHENBESCHICHTUNGEN AN SCHICHTPRESSSTOFFPLATTEN**
PROCESS FOR PRODUCING POLYURETHANE ACRYLATE SURFACE COATINGS FOR LAMINATED SHEETS
PROCEDE POUR PREPARER DES ENDUITS EN ACRYLATE DE POLYURETHANNE POUR LA SURFACE DE PANNEAUX EN STRATIFIES

(30) Priorität: 26.06.1996 AT 113296
(43) Veröffentlichungstag der Anmeldung: 10.06.1998
(73) Patentinhaber: ISOVOLTA Österreichische Isolierstoffwerke Aktiengesellschaft, 2355 Wiener Neudorf (AT)
(72) Erfinder: HORVATH, Michael, A-1220 Wien (AT); WEHRMANN, Felix, A-1190 Wien (AT); WEISS, Josef, A-1030 Wien (AT)
(74) Vertreter: Dungler, Karin
(86) Internationale Anmeldenummer: AT9700138
(87) Internationale Veröffentlichungsnummer: WO9749746

(56) Entgegenhaltungen:
- EP-A- 0 254 232
- EP-A- 0 542 219
- US-A- 4 436 570
- US-A- 4 999 271
- PATENT ABSTRACTS OF JAPAN vol. 008, no. 205 (C-243), 19.September 1984 & JP 59 093719 A (MATSUSHITA DENKO KK), 30.Mai 1984

## Beschreibung

### Technisches Gebiet

Die Erfindung betrifft ein Verfahren zur Herstellung von Schichtpreßstoffplatten bestehend aus mit Kunstharz imprägnierten flächigen Trägermaterialien sowie einer äußersten Schicht auf zumindestens einer Plattenoberfläche, welche im wesentlichen aus einem Polyurethanacrylat besteht.

### Stand der Technik

Polyacrylate sind technisch relevante Ausgangsstoffe für ein breites Spektrum an Anwendungsgebieten. So wird beispielsweise gemäß der US-A-4,999,271 ein mit Polyacrylaten beschichtetes Trägermaterial beschrieben, welches als Ausgangsstoff für die Herstellung von Leiterplatten dient. Ferner sind aus der US-A-4,436,570 Klebstoffsysteme auf Polyurethan(meth)-Acrylat-Basis zur Herstellung von Klebstoff-Verbunden vorbekannt. Aus der EP-A-166653 ist es bekannt, die Eigenschaften von Polyacrylaten für die Herstellung von Schichtpreßstoffplatten für Innen- oder Außenanwendungen im Bausektor auszunützen, wobei an die Plattenoberfläche hohe Anforderungen betreffend die mechanischen Eigenschaften wie Oberflächenhärte und Kratzbeanspruchung gestellt werden. An Schichtpreßstoffplatten für die Außenanwendung werden zusätzlich hohe Anforderungen hinsichtlich UV- und Witterungsbeständigkeit gestellt. So kann gemäß der EP-A-166653 eine Schichtpreßstoffplatte mit verbesserter Kratzbeanspruchung, nämlich von mindestens 2 Newton, bereitgestellt werden, die an ihrer Plattenoberfläche eine durch Strahlung ausgehärtete Acrylharzschicht aufweist. Zur Herstellung dieser Platten wird die äußerste Trägermaterialbahn, beispielsweise eine bedruckte Dekorpapierbahn, einseitig mit polymerisierbaren Acrylharzen beschichtet, sodaß ein geschlossener Harzfilm entsteht.

Dieser Film wird anschließend bei Raumtemperatur Elektronenstrahlen ausgesetzt, wodurch eine radikalische Vernetzungsreaktion des Acrylharzes stattfindet. Anschließend wird dieser vernetzte Acrylharzfilm als äußerste Lage mit einem für Schichtpreßstoffplatten üblichen Preßstapel bei erhöhtem Druck und erhöhter Temperatur verpreßt.

Dieses Verfahren ist nun vom Apparate-technischen Standpunkt insofern aufwendig, da eine relativ kompliziert aufgebaute

Elektronenstrahlungsquelle notwendig ist, um die gewünschte Oberflächenhärte der Acrylharzschicht zu erreichen.

Ferner ist der vernetzte Acrylharz-Film bei diskontinuierlichen Preßvorgängen insoferne schwer zu handhaben, da dieser beim Verschlichten des Preßstapels leicht einrollt und schüsselt. Dieser Effekt beruht auf einer durch die Strahlungspolymerisation ausgelösten, hohen Acrylatvernetzungsdichte, welche wiederum mit einer Materialschrumpfung des Acrylatpolymeren verbunden ist.

Hier will die Erfindung Abhilfe schaffen.

### Darstellung der Erfindung

Die der Erfindung zu Grunde liegende Aufgabe besteht nun darin, in einem leicht durchführbaren Verfahren zur Herstellung von Schichtpreßstoffplatten Trägermateriallagen derart zu beschichten und mit einem für Schichtpreßstoffplatten äußerste üblichen Preßstapel zu verpreßen, daß eine witterungsbeständige Polyurethanacrylat-Oberflächenbeschichtung mit zufriedenstellender Oberflächenhärte und Kratzbeanspruchung gebildet wird.

Erfindungsgemäß wird ein Verfahren zur Herstellung von Schichtpreßstoffplatten, bestehend aus mit Kunstharz imprägnierten, flächigen Trägermaterialien sowie einer äußersten Schicht auf zumindestens einer Plattenoberfläche, welche im wesentlichen aus einem Polyurethanacrylat besteht, vorgeschlagen.

Dieses Verfahren ist dadurch gekennzeichnet, daß a) ein Trägermaterial einseitig mit einem Beschichtungssystem versehen wird, daß dieses Beschichtungssystem eine Harzkomponente, die sowohl freie, reaktive (meth)acrylische Doppelbindungen als auch zumindestens zwei reaktive Hydroxylgruppen pro Molekühl enthält, eine Härterkomponente, auf Basis eines mehrfach funktionellen, mindestens difunktionellen Isocyanates, wobei die Harz- und die Härterkomponete in stöchiometrischen Mengenverhältnissen vorliegen sowie Zusatzstoffe aufweist, daß anschließend das derart beschichtete Trägermaterial bei erhöhten Temperaturen, vorzugsweise unterhalb von 140° C getrocknet wird, sodaß eine erste Vernetzungsreaktion der freien Hydroxylgruppen in der Harzkomponente mit den Isocyanatgruppen der Härterkomponente unter Ausbildung eines reaktive (meth)acrylische Doppelbindungen enthaltenden Urethanacrylatpräpolymers stattfindet, daß
b) ein Preßstapel bestehend aus mehreren mit Kunstharz imprägnierten Trägermaterialien gebildet wird, welcher zumindestens einseitig das gemäß a) hergestellte Trägermaterial als äußerste Schicht aufweist, daß c) dieser gemäß b) gebildete Preßstapel bei erhöhtem Druck und Temperaturen oberhalb der Trocknungstemperatur, vorzugsweise oberhalb von 140° C verpreßt wird, sodaß eine weitere Vernetzungsreaktion der reaktiven (meth)acrylischen Doppelbindungen unter Ausbildung eines Urethanacrylat-Polymeren stattfindet.

Durch die Temperatursteuerung im erfindungsgemäßen Verfahren reagiert die Harzkomponente in einem Zweistufen-Prozeß:

Im ersten Reaktionsschritt erfolgt die Additionspolymerisation der freien Hydroxylgruppen der Harzkomponente mit den funktionellen Gruppen der Härterkomponente, wobei die Reaktivität der (meth)acrylischen Doppelbindungen erhalten bleibt. Die vorzeitige Reaktion dieser (meth)acrylischen Doppelbindungen wird vorteilhafterweise durch Zusatz geeigneter Inhibitoren verhindert. Wird als Trägermaterial vorzugsweise ein imprägniertes Dekorpapier eingesetzt, so weist dieses nach dem ersten Reaktionsschritt eine Beschichtung auf Basis eines Polyurethanacrylatpräpolymeren auf, welches griffest und blockfrei ist. Diese beschichteten Trägermaterialien können daher problemlos, das heißt ohne unerwünschtes Einrollen, mit einem für Schichtpreßstoffplatten üblichen Preßstapel verschlichtet werden.

Im zweiten Reaktionsschritt erfolgt die Polymerisationsreaktion der (meth)acrylischen Doppelbindungen in der Harzkomponente, welche durch die erhöhten Temperaturen und Drücke während des Verpressens ausgelöst wird. Die Polymerisationsreaktion setzt ferner durch Zusatz geeigneter Radikalbildner ein.

Besonders bevorzugt ist der Einsatz von Beschichtungssystemen im erfindungsgemäßen Verfahren, wenn die Harzkomponete die allgemeine Formel 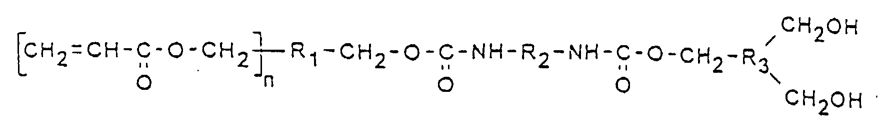 aufweist, worin R1 ein Alkyl- oder alphatische Polyether- bzw. Polyestergruppe, R2 und R3 aliphatische oder cycloaliphatische Gruppen bedeuten und n = 2-6, bevorzugt 3-5, ist, und daß die Härterkomponente des Beschichtungssystems ein Isocyanat der allgemeinen Formel 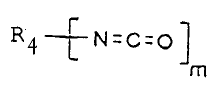 ist, wobei m mindestens 2, bevorzugt 3 ist und R₄ ein aliphatischer oder cycloaliphatischer Rest bedeutet.

Beim erfindungsgemäßen Verfahren kann vorteilhafterweise als Härterkomponete ein trifunktionelles Diisocyanat eingesetzt werden, welches zusätzlich bei Raumtemperatur in seiner Reaktivität blockiert sein kann.

Als Trägermaterialien können unter anderem für das Beschichtungssystem auch imprägnierte Dekorpapiere eingesetzt werden. Als Zusatzstoffe können dem Beschichtungssystem auch Füllstoffe und/oder Farbpigmente und/oder Flammschutzmittel und/ oder Lichtschutzmittel wie UV-Absorber oder Radikalfänger zugesetzt werden. Der Verfahrensablauf kann besonders vorteilhaft dadurch gesteuert werden, daß dem Beschichtungssystem als Zusatzstoffe Radikalbildner, welche bei Raumtemperatur stabil sind, und Inhibitoren zur Vermeidung der vorzeitigen Vernetzungsreaktion der (meth)arylischen Doppelbindungen zugesetzt werden.

### Einige Wege zur Ausführung der Erfindung

Die Erfindung wird nunmehr anhand von Ausführungsbeispielen näher erläutert:

### Beispiel 1:

### a) Herstellung der Harzkomponente:

In einem Reaktionsgefäß, welches mit Rührer, Heizung, Kühlung, Rückflußkühler und Gaseinleitung ausgestattet ist, werden 100 Gew.-Teile des polyfunktionellen Acrylatmonomers, beispielsweise Dipentaerythritpentaacrylat mit einem OH-äquivalentgewicht von 525, vorgelegt. Als Diisocyanat wird eines mit funktionellen Gruppen unterschiedlicher Reaktivität eingesetzt, beispielsweise Isophorondiisocyanat mit einem NCO-äquivalentgewicht von 111. Der Anteil an Isophorondiisocyanat beträgt 42,3 Gew. Teile.

Ferner werden der Reaktionsmischung 0,5% Hydrochinon als Inhibitor und 0,1% Dibutylzinndilaurat als Katalysator sowie 20 Gew.-Teile n-Butylacetat als Verdünnungsmittel zugegeben. In das Reaktionsgemisch wird während der gesamten Reaktionsdauer getrocknete Luft eingeleitet. Das Reaktionsgemisch wird solange bei einer Temperatur von ca. 60°C gerührt, bis der Gehalt an freien Isocyanatgruppen auf die Hälfte des Ausgangswertes gesunken ist (Bestimmung nach DIN 53 185). Dies ist bedingt durch die Ausbildung von Urethanbindungen. Anschließend wird das Reaktionsgemisch mit 25,5 Gew.-Teilen Trimethylolpropan, ein mehrfach funktioneller Alkohol mit einem OH-äquivalentgewicht von 44,7 versetzt und solange weiterreagieren gelassen bis der Isocyanatgehalt unter Ausbildung weiterer Urethanbindungen auf unter 0,5% abgesunken ist. Anschließend wird das Reaktionsgemisch auf Raumtemperatur gekühlt, mit n-Butylacetat auf ca. 80% verdünnt sowie weiteres Hydrochinon in einem Anteil von 0,5% zugegeben.

Die Viskosität dieser Urethanacrylatoligomer-Lösung beträgt bei 25°C etwa 3000 mPa.s. Sie ist mehrere Wochen bei unveränderten Viskositätswerten lagerfähig. Ihr OH-äquivalentgewicht beträgt 564. Sie kann in der Folge als Harzkomponente in dem erfindungsgemäßen Beschichtungssystem eingesetzt werden.

### b) Herstellung des Beschichtungssystems:

Für die Herstellung eines erfindungsgemäßen Beschichtungssystems werden 100 Gew.-Teile einer Harzkomponenten-Lösung gemäß a) mit 34,6 Gew.-Teilen einer Härterkomponente in Form eines trimerisierten Hexamethylendiisocyanats mit einem Isocyanat-Äquivalentgewicht von 195 gemischt und mit 0,1 Gew.-Teilen tert. Butylperbenzoat als Radikalbildner versetzt. Die Halbwertszeit von tert. Butylperoxyd beträgt bei 140°C ca. 10 Minuten.

Diesem Beschichtungssystem können ferner die für Beschichtungssysteme bekannten Zusatzstoffe wie Verlaufmittel, Entschäumer sowie Entgasungsmittel zugegeben werden. Die Gebrauchsdauer des Beschichtungssystems liegt bei 1 - 1,5 Stunden.

### Beispiel 2:

Die Herstellung des Beschichtungssystems erfolgt wie in Beispiel 1. Für die Herstellung der Harzkomponente wird als polyfunktionelles Acrylatmonomer ein alkoxyliertes Pentaerythrittriacrylat mit einem Molekulargewicht von 550 verwendet.

### Beispiel 3:

Die Herstellung des Beschichtungssystems erfolgt wie in Beispiel 1. An Stelle von Isophorondiisocyanat wird jedoch für die Herstellung der Harzkomponente Trimethylhexamethylendiisocyanat eingesetzt.

### Beispiel 4:

Die Herstellung des Beschichtungssystems erfolgt wie in Beispiel 3. Anstelle von Dipentaerythritpentaacrylat wird ein alkoxyliertes Pentaerythrittriacrylat eingesetzt.

### Beispiel 5:

Ein Beschichtungssystem, welches gemäß einem der Beispiele 1 bis 4 herstellbar ist, wird in einer Beschichtungsanlage mittels Auftragswalzen auf ein Trägermaterial aufgebracht. Das Trägermaterial kann beispielsweise ein Papier-Kunststoffolienverbund sein. Das Beschichtungssystem wird in einer Dicke von 40g/m² aufgetragen. Anschließend erfolgt im Trockner einer Beschichtungsanlage bei Temperaturen zwischen 100 und 120°C eine teilweise Vernetzungsreaktion zwischen der Isocyanatgruppe aus der Härterkomponente und den freien Hydroxylgruppen der Harzkomponente unter Ausbildung eines (meth)acrylische Doppelbindungen enthaltenden Urethanacrylatpräpolymeren. Gleichzeitig erfolgt die Verdampfung der eingesetzten Lösungsmittel. Die Durchlaufgeschwindigkeit im Trockner wird derart gewählt, daß das beschichtete Trägermaterial als griffester Film vorliegt, welcher auf Vorratsrollen beliebig lange lagerbar ist.

Für die Herstellung von Schichtpreßstoffplatten mit Polyurethanacrylatoberfläche können nun im entsprechenden Plattenformat Streifen von den Vorratsrollen abgeschnitten werden und mit den übrigen Komponenten des Schichtpaketes wie folgt verschlichtet werden:
- beschichtetes Trägermaterial, welches mit seiner beschichteten Oberfläche der dekorativen Schicht zugewandt ist,
- dekorative Schicht aus mit Melaminharz imprägniertem, bedruckten oder pigmentierten Dekorpapier
- Kernschicht bestehend aus etwa 12 mit Phenolharz imprägnierten Papierbahnen
- dekorative Schicht aus mit Melaminharz imprägnierten, bedruckten oder pigmentierten Dekorpapier
- gegebenenfalls ein weiteres beschichtetes Trägermaterial, welches mit seiner beschichteten Oberfläche der dekorativen Schicht zugewandt ist.

Dieser Preßstapel wird mit einem Druck von 90 bar und einer Temperatur von 140°C etwa 20 min. lang verpreßt. Bei diesen Reaktionstemperaturen erfolgt die weitere, durch die im Beschichtungssystem vorliegenden Radikalbildner ausgelöste Vernetzungsreaktion der reaktiven (meth)acrylischen Doppelbindungen unter Ausbildung eines ausgehärteten Polyurethanacrylates. Gleichzeitig erfolgt die Aushärtung der in den Dekor- und Kernschichtlagen eingesetzten Imprägnierharze. Nach etwa 20 min. wird der Preßstapel unter Druck rückgekühlt und der Presse entnommen. Anschließend wird das Trägermaterial von der Plattenoberfläche abgezogen, welche nun mit einer ausgehärteten Polyurethanacrylatschicht zumindestens einseitig versehen ist, deren Wert für die Kratzfestigkeit ca. 4N (DIN 53 999, Teil 10) beträgt. Die Plattenoberfläche weist ferner eine hohe Widerstandsfähigkeit gegenüber konzentrierter Mineralsäure wie Schwefelsäure und gegenüber Lösungsmitteln wie Aceton auf. Die Witterungsbeständigkeit der Platte wurde nach ASTM G 53-84 gemessen; die Plattenoberfläche zeigt nach 3000 h keinerlei Glanzverlust und Verfärbung.

### Beispiel 6:

Ein Beschichtungssystem, welches gemäß einem der Beispiele 1 bis 4 herstellbar ist, wird in einer Beschichtungsanlage mittels Auftragswalzen auf ein vorimprägniertes Dekorpapier von ca. 100g/m² aufgebracht.

Die Vorimprägnierung des Dekorpapiers erhöht die Haftung des eingesetzten Beschichtungssystems auf dem Dekorpapier; als Imprägnierharze können für die Vorimprägnierung beispiels-weise Acrylatharze oder Aminoplastharze oder Mischharze eingesetzt werden.

Während des Verfahrens wird die Dicke des aufgetragenen Beschichtungssystems mit einer Rakel auf 80-100g/m² eingestellt. Das derart beschichtete Dekorpapier durchläuft anschließend bei 120°C einen 20m langen Trockenkanal. Bei diesen Temperaturen erfolgt eine erste Vernetzungsreaktion zwischen den freien Hydroxylgruppen der Harzkomponente mit den Isocyanatgruppen der Härterkomponente unter Ausbildung eines noch reaktive (meth)acrylische Doppelbindungen enthaltenden Urethanacrylatpräpolymeren.

Die Reaktivitat der Härterkomponente kann zusätzlich durch Einsatz von blockierten Isocyanten gesteuert werden, welche bei Raumtemperatur inert, jedoch bei Temperaturen zwischen 100° und 120°C reaktiv sind.

Zusätzlich werden bei diesen erhöhten Temperaturen die im Beschichtungssystem gegebenenfalls vorhandenen Lösungsmittel abgedampft. Es entsteht somit ein beschichtetes Dekorpapier in Form eines griffesten, jedoch flexiblen Films, welcher gegenüber Lösungsmitteln beständig ist. Dieser flexible Film wird auf Vorratsrollen aufgerollt und ist beliebig lange lagerbar.

Für die Herstellung von Schichtpreßstoffplatten mit Polyurethanacrylatoberfläche können nun im entsprechenden Plattenformat Streifen von den Vorratsrollen abgeschnitten und mit den übrigen Komponenten des Schichtpaketes wie folgt verschlichtet werden:
- beschichtetes Dekorpapier, dessen Beschichtung im wesentlichen aus einem reaktive Acrylatgruppen enthaltenden Polyurethanacrylat besteht
- Kernschicht bestehend aus etwa 12 mit Phenolharz imprägnierten Papierbahnen
- beschichtetes Dekorpapier, dessen Beschichtung im wesentlichen aus einem reaktive Acrylatgruppen enthaltenden Polyurethanacrylat besteht.

Dieser Preßstapel wird mit einem Druck von 90 bar und einer Temperatur von 140°C etwa 20 min. lang verpreßt. Bei diesen Reaktionstemperaturen erfolgt die weitere Vernetzungsreaktion der (meth)acrylischen Doppelbindungen unter Ausbildung des ausgehärteten Polyurethanacrylates. Diese Vernetzungsreaktion wird durch die im Beschichtungssystem der Dekorlage latent vorliegenden Radikalbildner ausgelöst. Sie kann ferner durch ein "Deblockieren" von Isocyanaten in der Härterkomponnete beschleunigt werden, welche erst bei Temperaturen ab 140°C reaktiv sind.

Gleichzeitig erfolgt die Aushärtung der in den Dekor- und Kernschichtlagen eingesetzten Imprägnierharze. Nach etwa 20 min. wird der Preßstapel unter Druck rückgekühlt und der Presse entnommen. Die Plattenoberfläche weist nun eine ausgehärtete Polyurethanacrylatschicht auf, deren Wert für die Kratzfestigkeit ca. 4N (DIN 53 999, Teil 10) beträgt.

Sie weist ferner eine hohe Widerstandsfähigkeit gegenüber konzentrierten Mineralsäure wie Schwefelsäure und gegenüber Lösungsmittel wie Aceton auf. Die Witterungsbeständigkeit der Platte wurde nach ASTM G 53-84 gemessen; die Plattenoberfläche zeigt nach 3000 h keinerlei Glanzverlust und Verfärbung.

### Gewerbliche Anwendbarkeit

Durch das erfindungsgemäße Verfahren wird eine vollständig vernetzte und dadurch kratzfeste Oberflächenbeschichtung auf Basis eines Urethanacrylatpolymeren an der Oberfläche einer Schichtpreßstoffplatte erzeugt. Die Ritzhärte dieser Oberflächenbeschichtung, gemessen nach EN 438, beträgt mindestens 2N.

Die erfindungsgemäß hergestellten, mit dieser Oberflächenbeschichtung versehenen Schichtpreßstoffplatte eignen sich für die Innen- und Außenanwendung; sie sind ferner gegen Lösungsmittel beständig, sodaß etwa unerwünscht angebrachte Graffitis leicht entfernt werden können.

## Patentansprüche

1. Verfahren zur Herstellung von Schichtpreßstoffplatten, bestehend aus mit Kunstharz imprägnierten, flächigen Trägermaterialien sowie einer äußersten Schicht auf zumindestens einer Plattenoberfläche, welche im wesentlichen aus einem Polyurethanacrylat besteht, dadurch gekennzeichnet, daß
a) ein Trägermaterial einseitig mit einem Beschichtungssystem versehen wird, daß dieses Beschichtungssystem eine Harzkomponente, die sowohl freie, reaktive (meth)acrylische Doppelbindungen als auch zumindestens zwei reaktive Hydroxylgruppen pro Molekül enthält, eine Härterkomponente, auf Basis eines mehrfach funktionellen, mindestens difunktionellen Isocyanates, wobei die Harz- und die Härterkomponente in stöchiometrischen Mengenverhältnissen vorliegen, sowie Zusatzstoffe enthält, daß anschließend das derart beschichtete Trägermaterial bei erhöhten Temperaturen, vorzugsweise unterhalb von 140°C getrocknet wird, sodaß eine erste Vernetzungsreaktion der freien Hydroxylgruppen in der Harzkomponente mit den Isocyanatgruppen der Härterkomponente unter Ausbildung eines reaktive (meth)acrylische Doppelbindungen enthaltenden Urethanacrylatpräpolymers stattfindet, daß
b) ein Preßstapel bestehend aus mehreren mit Kunstharz imprägnierten Trägermaterialien gebildet wird, welcher zumindestens einseitig das gemäß a) hergestellte Trägermaterial als äußerste Schicht aufweist, daß
c) dieser gemäß b) gebildete Preßstapel bei erhöhtem Druck und Temperaturen oberhalb der Trocknungstemperatur, vorzugsweise oberhalb von 140° C verpreßt wird, sodaß eine weitere Vernetzungsreaktion der reaktiven (meth)acrylischen Doppelbindungen unter Ausbildung eines Urethanacrylat-Polymeren stattfindet.

2. Verfahren nach Anspruch 1, dadurch gekennzeichnet, daß die Harzkomponente des Beschichtungssystems die allgemeine Formel 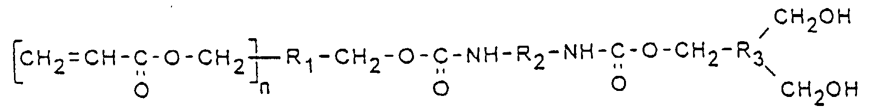 aufweist, worin R1 eine Alkyl- oder alphatische Polyether- bzw. Polyestergruppe, R2 und R3 aliphatische oder cycloaliphatische Gruppen bedeuten und n = 2-6, bevorzugt 3-5, ist, und daß die Härterkomponente des Beschichtungssystems ein Isocyanat der allgemeinen Formel 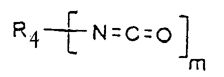 ist, wobei m mindestens 2, bevorzugt 3 ist und R₄ ein aliphatischer oder cycloaliphatischer Rest bedeutet.

3. Verfahren nach Anspruch 1 oder 2, dadurch gekennzeichnet, daß als Härterkomponete im Beschichtungssystem ein trifunktionelles Diisocyanat eingesetzt wird.

4. Verfahren nach einem der Ansprüche 1 bis 3, dadurch gekennzeichnet, daß ein bei Raumtemperatur in seiner Reaktivität blockiertes Diisocyanat als Härterkomponente im Beschichtungssystem eingesetzt wird.

5. Verfahren nach einem der Ansprüche 1 bis 4, dadurch gekennzeichnet, daß als Trägermaterial ein imprägniertes Dekorpapier eingesetzt wird.

6. Verfahren nach einem der Ansprüche 1 bis 5, dadurch gekennzeichnet, daß dem Beschichtungssystem als Zusatzstoffe Füllstoffe und/oder Farbpigmente und/oder Flammschutzmittel und/oder Lichtschutzmittel wie UV-Absorber oder Radikalfänger zugesetzt werden.

7. Verfahren nach einem der Ansprüche 1 bis 6, dadurch gekennzeichnet, daß den Beschichtungssystem als Zusatzstoffe Radikalbildner, welche bei Raumtemperatur stabil sind, und Inhibitoren zur Vermeidung der vorzeitigen Vernetzungsreaktion der (meth)acrylischen Doppelbindungen zugesetzt werden.

## Claims

1. A method of producing laminated plastics sheets, consisting of planar carrier materials impregnated with synthetic resin, and also of an outermost layer on at least one sheet surface, which consists substantially of a polyurethane acrylate, characterised in that
a) a carrier material is provided on one side with a coating system, in that this coating system contains a resin component which contains both free reactive (meth)acrylic double bonds and at least two reactive hydroxyl groups per molecule, a curing component based on a multifunctional, at least difunctional isocyanate, wherein the resin component and curing component are present in stoichiometric relative proportions, and also contains additives, in that subsequently the carrier material coated in this way is dried at high temperatures, preferably below 140°C, so that a first cross-linking reaction of the free hydroxyl groups takes place in the resin component with the isocyanate groups of the curing component to form a urethane acrylate prepolymer containing reactive (meth)acrylic double bonds, in that
b) a press stack is formed consisting of a plurality of carrier materials impregnated with synthetic resin, which has on at least one side the carrier material produced according to a) as the outermost layer, in that
c) this press stack formed according to b) is pressed at high pressure and high temperatures above the drying temperature, preferably above 140°C, so that a further cross-linking reaction of the reactive (meth)acrylic double bonds to form a urethane acrylate prepolymer takes place.

2. A method according to Claim 1, characterised in that the resin component of the coating system is of the general formula 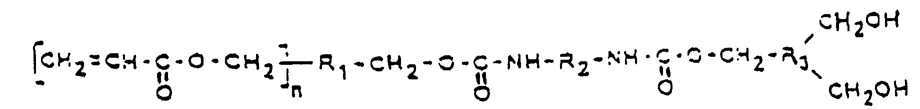 wherein R1 represents an alkyl or aliphatic polyether or polyester group, R2 and R3 represent aliphatic or cycloaliphatic groups and n = 2-6, preferably 3-5, and in that the curing component of the coating system is an isocynate of the general formula 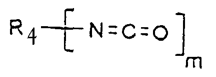 wherein m is at least 2, preferably 3, and R4 represents an aliphatic or cycloaliphatic residue.

3. A method according to Claim 1 or 2, characterised in that a trifunctional diisocyanate is used as curing component in the coating system.

4. A method according to any one of Claims 1 to 3, characterised in that a diisocyanate, which is blocked in its reactivity at room temperature, is used as curing component in the coating system.

5. A method according to any one of Claims 1 to 4, characterised in that an impregnated decorative paper is used as the carrier material.

6. A method according to any one of Claims 1 to 5, characterised in that fillers and/or coloured pigments and/or fireproofing agents and/or light-protecting agents, such as UV absorbers or free-radical scavengers are added as additives to the coating system.

7. A method according to any one of Claims 1 to 6, characterised in that radical formers, which are stable at room temperature, and inhibitors for preventing the premature cross-linking reaction of the (meth)acrylic double bonds are added as additives to the coating system.

## Revendications

1. Procédé de fabrication de plaques stratifiées de matière comprimée, consistant en matériaux de support plats imprégnés de résine ainsi que d'une couche extérieure sur au moins une face de la plaque, qui consiste principalement en polyuréthane acrylate, caractérisé en ce que :
a) le support a reçu sur l'une de ses faces un système de revêtement, en ce que ce système de revêtement renferme un composant de résine qui contient aussi bien des doubles liaisons (méth)acryliques libres réactives ainsi qu'également au moins deux groupes hydroxyles réactives par molécule, un composant durcisseur à base d'un isocyanate polyfonctionnel, au moins difonctionnel, dans lequel le composant résine et le composant durcisseur sont présents en proportion stoechiométrique, ainsi que des additifs et en ce qu'ensuite le matériau de support ainsi revêtu est séché à température élevée, de préférence en dessous de 140°C de façon à ce que se déroule une réaction de réticulation des groupes hydroxyles libres du composant résine avec les groupes isocyanate du composant durcisseur avec formation d'un prépolymère uréthane acrylate contenant des doubles liaisons (méth)acryliques réactives, et en ce que
b) on construit un empilement comprimé de plusieurs supports imprégnés de résine de matière plastique qui supporte sur au moins une de ses faces le support préparé selon a) comme couche extérieure, et en ce que
c) cet empilement construit selon b) est comprimé sous pression élevée et à une température supérieure à la température de séchage, de préférence supérieure à 140°C, de façon à ce qu'il se produise une réaction de réticulation supplémentaire des doubles liaisons (méth)acryliques réactives avec formation d'un polymère uréthane acrylate.

2. Un procédé selon la revendication 1, caractérisé en ce que le composant résine du système de revêtement répond à la formule générale: 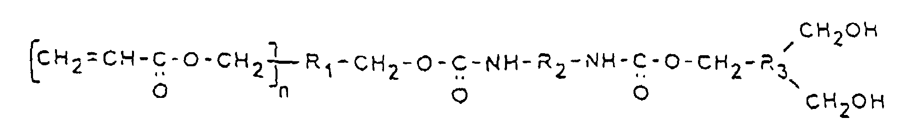 dans laquelle R1 représente un groupe alkyle ou aliphatique polyéther ou polyester, R2 et R3 sont des groupes aliphatiques ou cycloaliphatiques et n = 2 à 6, de préférence 3 à 5, et en ce que le composant durcisseur du système de revêtement est un isocyanate de formule générale : 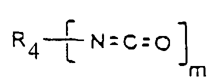 dans lequel m vaut au moins 2, de préférence 3, et R4 est un reste aliphatique ou cycloaliphatique.

3. Procédé selon la revendication 1 ou 2, caractérisé en ce que, en tant que composant durcisseur, on utilise un diisocyanate trifonctionnel dans le système de revêtement.

4. Procédé selon une quelconque des revendications 1 à 3, caractérisé en ce que dans le système de revêtement, en tant que composant durcisseur, on introduit un diisocyanate dont la réactivité est bloquée à la température ambiante.

5. Procédé selon une quelconque des revendications 1 à 4, caractérisé en ce que, en tant que support, on utilise un papier décoratif imprégné.

6. Procédé selon une quelconque des revendications 1 à 5, caractérisé en ce que le système de revêtement est additionné avec des additifs tels que des charges et/ou des pigments et/ou des produit ignifugeants et/ou des agents de protection contre la lumière comme des absorbants de UV ou des pièges à radicaux libres.

7. Procédé selon une quelconque des revendications 1 à 6, caractérisé en ce que, le système de revêtement est additionné avec des additifs tels que des agents de formation de radicaux libres, qui sont stables à la température ambiante, et des inhibiteurs pour empêcher la réaction de réticulation prématurée des doubles liaisons (méth)acryliques.
